# EUROPÄISCHE PATENTANMELDUNG

(11) **EP 2 039 627 A2**
(43) Veröffentlichungstag der Anmeldung: **25.03.2009**
(21) Anmeldenummer: 08021249.1
(22) Anmeldetag: 26.11.2007
(51) Int. Cl.: B65G 21/04, B65G 39/20

(54) **Förderanlage zum Transport von Gütern**

(30) Priorität: 24.07.2007 AT 11712007
(62) Teilanmeldung aus: 07450209.7
(71) Anmelder: Innova Patent GmbH, 6960 Wolfurt (AT)
(72) Erfinder: Trieb, Herbert, 6911 Lochau (AT)
(74) Vertreter: Hehenberger, Reinhard

(57) **Zusammenfassung**

Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist und wobei weiters das Förderband (1) und der Tragbalken (2) mittels Schraubbolzen (4), deren Kopf sich an der dem Tragbalken (2) abgewandten Seite des Förderbandes (1) befindet, miteinander verbunden sind. Dabei sind die Tragbalken (2) mit von der an die Dichtungsleiste (3) anliegenden Seite ausgehenden Sackbohrungen (21) ausgebildet, in welche die Schraubbolzen (4) eingeschraubt sind.

## Beschreibung

Die gegenständliche Erfindung betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen und wobei zumindest bei einem Teil der Tragbalken zwischen der Unterseite der Tragbalken und der Oberseite des Förderbandes eine aus einem elastischen Material bestehende Dichtungsleiste vorgesehen ist und wobei das Förderband und der Tragbalken mittels Schraubbolzen, deren Kopf sich an der dem Traagbalken abgewandten Seite des Förderbandes befindet, miteinander verbunden sind.

Bei derartigen Förderanlagen, welche z.B. aus der DE 10348516 A1 bekannt sind, ist das Förderband an der Unterseite der Tragbalken dadurch befestigt, dass über die Länge der Tragbalken mehrere im Abstand voneinander befindliche Schraubbolzen vorgesehen sind, welche die Tragbalken und das Förderband durchsetzen und deren von der Oberseite der Tragbalken abragende Enden mittels Muttern verschraubt sind.

Bei dieser Art der Befestigung besteht jedoch das Problem, dass die verschraubten Enden der Schraubmuttern durch das Fördergut so stark beschädigt werden können, dass die Schrauben nicht mehr gelöst werden können. Der gegenständlichen Erfindung liegt somit die Aufgabe zugrunde, eine solche Anordnung der Schrauben zu schaffen, dass diese Schwierigkeit vermieden wird. Diese Aufgabe wird erfindungsgemäß dadurch gelöst, dass die Tragbalken mit von der an die Dichtungsleiste anliegenden Seite ausgehenden Sackbohrungen ausgebildet sind, in welche die Schraubbolzen eingeschraubt sind.
Vorzugsweise ist die Unterseite der Dichtungsleiste mit der Oberseite des Förderbandes durch Klebung verbunden.

Vorzugsweise ist weiters die Unterseite des Förderbandes mit den Tragbalken zugeordneten Nuten ausgebildet, in welche jeweils eine Verstärkungsleiste eingesetzt ist, an welche der jeweilige Kopf des Schraubbolzens anliegt.

Der Gegenstand der Erfindung ist nachstehend anhand von in den Zeichnungen dargestellten Ausführungsbeispielen näher erläutert. Es zeigen:
- FIG.1: einen Abschnitt einer Transportanlage, in axonometrischer Darstellung;
- FIG.2: einen Abschnitt des Förderbandes der Förderanlage gemäß FIG.1, in axonometrischer Darstellung;
- FIG.3: einen Abschnitt des Förderbandes, in einem Längsschnitt; und
- FIG.4: ein Ausführungsbeispiel der Befestigung des Förderbandes an einem Tragbalken, im Querschnitt.

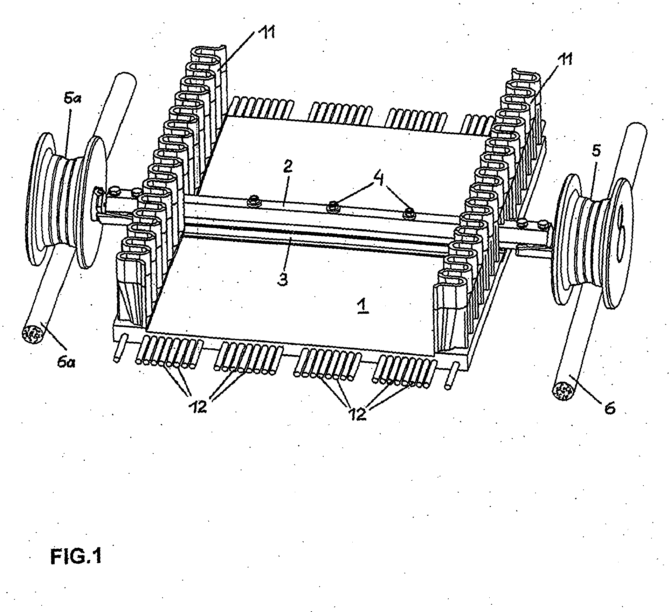

In FIG.1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Die Befestigung des Förderbandes 1 an den Tragbalken 2 erfolgt z.B. mittels das Förderband 1 und die Tragbalken 2 durchsetzender Schraubbolzen 4. Durch die zwischen dem Förderband 1 und den Tragbalken 2 befindlichen Dichtungsleisten 3 wird vermieden, dass sich zwischen dem Förderband 1 und den Tragbalken 2 jeweils Spalte ausbilden, in welche Fördergut eindringt, wodurch das Förderband 1 einem erhöhten Verschleiß unterliegt.

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.

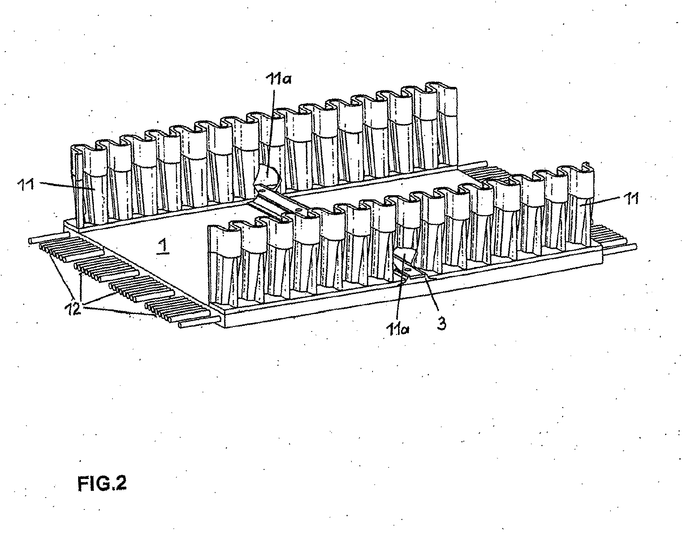

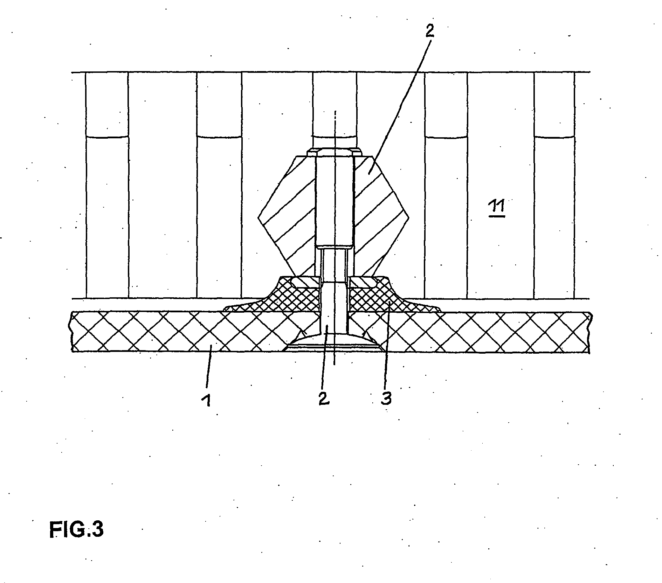

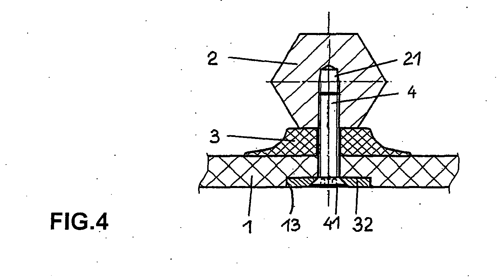

Aus den FIG.2 und FIG.3 ist ersichtlich, dass die seitlichen Wellkanten 11 mit Ausnehmungen 11a für die Tragbalken 2 ausgebildet sind und dass sich die Dichtungsleisten 3 an der Oberseite des Förderbandes 1 befinden.
Wie dies aus FIG.4 ersichtlich ist, sind an der Unterseite des Förderbandes 1 Nuten 13 vorgesehen, in welchen sich Verstärkungsleisten 32 befinden, durch welche mittels der Schraubbolzen 4, welche die Dichtungsleisten 3, das Förderband 1 und die Verstärkungsleisten 32 durchsetzen, das Förderband 1 unter Zwisschenlage der Dichtungsleisten 3 an die Tragbalken 2 über die gesamte Breite des Förderbandes 1 angepresst wird. Die Köpfe 41 der Schraubbolzen 4 sind in die Verstärkungsleisten 32 eingesetzt.

Auch hierdurch wird die Ausbildung von Spalten zwischen dem Förderband 1 und den Tragbalken 2 ausgeschlossen. Auch dabei sind die Dichtungsleisten 3 mit dem Förderband 1 verklebt. Um zu vermeiden, dass die oberen Enden durch das vom Förderband 1 transportierte Fördergut einem starken Verschleiß unterliegen, und somit zu gewährleisten, dass die Schraubbolzen 4 jederzeit wieder gelöst werden können, sobald dies für den Austausch von Tragbalken 2 erforderlich ist, sind die Tragbalken 2 mit Sackbohrungen 21 ausgebildet, in welche die oberen Enden der Schraubbolzen 4 eingeschraubt sind.

## Patentansprüche

1. Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist und wobei weiters das Förderband (1) und der Tragbalken (2) mittels Schraubbolzen (4), deren Kopf sich an der dem Tragbalken (2) abgewandten Seite des Förderbandes (1) befindet, miteinander verbunden sind, **dadurch gekennzeichnet, dass** die Tragbalken (2) mit von der an die Dichtungsleiste (3) anliegenden Seite ausgehenden Sackbohrungen (21) ausgebildet sind, in welche die Schraubbolzen (4) eingeschraubt sind.

2. Förderanlage nach Patentanspruch 1, **dadurch gekennzeichnet, dass** die Unterseite der Dichtungsleiste (3) mit der Oberseite des Förderbandes (1) durch Klebung verbunden ist.

3. Förderanlage nach einem der Patentansprüche 1 und 2, **dadurch gekennzeichnet, dass** die Unterseite des Förderbandes (1) mit den Tragbalken (2) zugeordneten Nuten (13) ausgebildet ist, in welche jeweils eine Verstärkungsleiste (32) eingesetzt ist, an welche der jeweilige Kopf (41) des Schraubbolzens (4) anliegt.
